(19) **Europäisches Patentamt / European Patent Office / Office européen des brevets**

(11) **EP 4 600 971 A1**

(12) **EUROPEAN PATENT APPLICATION**
published in accordance with Art. 153(4) EPC

(43) Date of publication:
**13.08.2025 Bulletin 2025/33**

(21) Application number: **23885855.9**

(22) Date of filing: **02.11.2023**

(51) International Patent Classification (IPC):
$H01B\ 1/06\ ^{(2006.01)}$     $C01G\ 33/00\ ^{(2006.01)}$
$C01G\ 35/00\ ^{(2006.01)}$     $H01M\ 10/052\ ^{(2010.01)}$
$H01M\ 10/0562\ ^{(2010.01)}$

(52) Cooperative Patent Classification (CPC):
C01G 33/00; C01G 35/00; H01B 1/06;
H01M 10/052; H01M 10/0562

(86) International application number:
**PCT/JP2023/039612**

(87) International publication number:
**WO 2024/096101 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 JP 2022177637**

(71) Applicants:
• **Sumitomo Chemical Company, Limited
  Tokyo 103-6020 (JP)**

• **Kyoto University
  Kyoto-shi, Kyoto 606-8501 (JP)**

(72) Inventors:
• **DOI Atsunori
  Niihama-shi, Ehime 792-8521 (JP)**
• **KAGEYAMA Hiroshi
  Kyoto-shi, Kyoto 606-8501 (JP)**

(74) Representative: **Vossius & Partner
  Patentanwälte Rechtsanwälte mbB
  Siebertstrasse 3
  81675 München (DE)**

(54) **ION CONDUCTIVE SUBSTANCE, ELECTROLYTE, AND BATTERY**

(57) An ion conductive substance contains an alkali metal element, a metal element M, a halogen element, a dopant element X, and an oxygen element, in which the metal element M is at least one of Ta and Nb, and the dopant element X is at least one element selected from the group consisting of Ga, In, Sb, Bi, Mg, Ca, Sr, and Ba.

*Fig.1*

## Description

## Technical Field

The present disclosure relates to an ion conductive substance, an electrolyte, and a battery.

## Background Art

In recent years, solid electrolytes have attracted attention as electrolytes used in electrochemical devices such as lithium ion batteries (Patent Literatures 1 to 3). Since the solid electrolytes are excellent in high-temperature resistance, high voltage resistance, and the like as compared to conventional electrolytic solutions, it is considered that the solid electrolytes are useful for improving battery performance such as safety, high capacity, rapid charging and discharging, and pack energy density.

As described in Patent Literatures 1 to 3, halide solid electrolytes containing lithium and metal elements other than lithium are known as materials used for solid electrolytes of lithium ion batteries. The halide solid electrolytes do not require sintering because of high flexibility, and have high safety because of not releasing harmful substances such as $H_2S$, and the like, which are advantages not found in oxide-based or sulfidebased solid electrolytes.

## Citation List

## Patent Literature

Patent Literature 1: WO 2020/137153 A
Patent Literature 2: WO 2021/220578 A
Patent Literature 3: WO 2021/220577 A

## Summary of Invention

## Technical Problem

However, the halide solid electrolytes still have room for improvement in ionic conductivity.

The present disclosure has been made in view of the above circumstances, and an object thereof is to provide an ion conductive substance having excellent ionic conductivity, and an electrolyte and a battery using the same.

## Solution to Problem

The present disclosure includes the following embodiments [1] to [9].

[1] An ion conductive substance containing an alkali metal element, a metal element M, a halogen element, a dopant element X, and an oxygen element,

wherein the metal element M is at least one of Ta and Nb, and
the dopant element X is at least one element selected from the group consisting of Ga, In, Sb, Bi, Mg, Ca, Sr, and Ba.

[2] The ion conductive substance according to [1], wherein the halogen element contains Cl.
[3] The ion conductive substance according to [1] or [2], wherein the dopant element X contains at least one element of In and Bi.
[4] The ion conductive substance according to any one of [1] to [3], wherein a content of the dopant element X with respect to the metal element M is 25% by mol or less.
[5] The ion conductive substance according to any one of [1] to [4], wherein a content of the alkali metal element is 6% to 25% by mol, a content of the metal element M is 5% to 16% by mol, a content of the halogen element is 40% to 70% by mol, and a content of the dopant element X is 0.1% to 1.5% by mol with a total number of atoms contained in the ion conductive substance as a reference.
[6] The ion conductive substance according to any one of [1] to [5], wherein at least one diffraction peak having a half-value width of 1.5° to 10° is present within a range in which a 2θ angle is 10° to 20° in an X-ray diffraction chart measured using a CuKα ray at 25°C.

[7] The ion conductive substance according to any one of [1] to [5], wherein a half-value width of a diffraction peak having a highest peak height within a range in which a 2θ angle is 10° to 20° is 0.1° or more and less than 1.5° in an X-ray diffraction chart measured using a CuKα ray at 25°C.

[8] An electrolyte including a compound according to any one of [1] to [7].

[9] A battery including the electrolyte according to [8].

**Advantageous Effects of Invention**

According to the present disclosure, it is possible to provide the ion conductive substance having excellent ionic conductivity, and the electrolyte and the battery using the same.

**Brief Description of Drawings**

FIG. 1 is a diagram illustrating an X-ray diffraction chart obtained for ion conductive substances of each of Examples and Comparative example.

FIG. 2 is a diagram illustrating Arrhenius plots obtained for ion conductive substances of Examples 1, 4, and 7 and Comparative Example 1.

FIG. 3 illustrates charge and discharge test results of a secondary battery of Example 3.

FIG. 4 is a result of direct current density evaluation by symmetric cells using the ion conductive substance of Example 1.

**Description of Embodiments**

An ion conductive substance of the present embodiment contains an alkali metal element, a metal element M, a halogen element, a dopant element X, and an oxygen element, the metal element M is at least one of Ta and Nb, and the dopant element X is at least one element selected from the group consisting of Ga, In, Sb, Bi, Mg, Ca, Sr, and Ba.

The alkali metal element contained in the ion conductive substance of the present embodiment may be any of Li, Na, K, Rb, or Cs, and may contain at least one of Li, Na, or K, may contain at least one of Li or Na, or may contain Li.

Among the alkali metal elements contained in the ion conductive substance, the proportion of one alkali metal element may be 80% by mol or more, 90% by mol or more, or 95% by mol or more. The one alkali metal element may be at least one of Li, Na, or K, may be at least one of Li or Na, or may be Li.

A content of the alkali metal element in the ion conductive substance may be 6% to 30% by mol, 8% to 27% by mol, 10% to 25% by mol, or 11% to 23% by mol with respect to a total amount of atoms contained in the ion conductive substance.

The metal element M may be at least one of Ta and Nb, and Ta is preferable. A content of the metal element M in the ion conductive substance may be 5% to 20% by mol, 6% to 18% by mol, 8% to 15% by mol, or 9% to 13% by mol with respect to the total amount of atoms contained in the ion conductive substance. Among the metal elements other than the alkali metal element contained in the ion conductive substance, a total content of Ta and Nb may be more than 50% by mol, 60% by mol or more, 70% by mol or more, 75% by mol or more, 80% by mol or more, 85% by mol or more, or 90% by mol or more. Ta and Nb may have a valence of 5. Note that the total content of Ta and Nb refers to a content of Ta or Nb alone when the ion conductive substance contains only either Ta or Nb. Among the metal elements other than the alkali metal element contained in the ion conductive substance, a content of Ta may be more than 50% by mol, 60% by mol or more, 70% by mol or more, 75% by mol or more, 80% by mol or more, 85% by mol or more, or 90% by mol or more. Ta and Nb may have a valence of 5.

The dopant element X contained in the ion conductive substance of the present embodiment may be at least one element selected from the group consisting of Ga, In, Sb, Bi, and Mg, may contain at least one of In and Bi, or may contain Bi, In, or Sb.

A content of the dopant element X in the ion conductive substance may be 0.01% to 3% by mol, 0.05% to 2.5% by mol, 0.08% to 2% by mol, or 0.1% to 1.5% by mol with respect to the total amount of atoms contained in the ion conductive substance.

The content of the dopant element X in the ion conductive substance is 25% by mol or less with respect to the content of the metal element M, and may be 0.1% to 15% by mol, 0.5% to 10% by mol, or 1% to 5% by mol. The content of the dopant element X in the ion conductive substance may be 20% by mol or less, 18% by mol or less, 15% by mol or less, or 13% by mol or less of the content of the metal element M.

The halogen element contained in the ion conductive substance of the present embodiment may be any of F, Cl, Br, or I, and may include at least one of Cl, Br, or I, may include at least one of Cl or Br, or may include Cl. The ion conductive substance may contain only one halogen element, or may contain two or more halogen elements.

A content of the halogen element in the ion conductive substance may be 40% to 70% by mol, 45% to 65% by mol, or 50% to 60% by mol with respect to the total amount of atoms contained in the ion conductive substance. A content of Cl in the ion conductive substance may be 50% by mol or more, 70% by mol or more, 80% by mol or more, 90% by mol or more, or 95% by mol or more with respect to a total amount of halogen elements contained in the ion conductive substance. A content of a halogen element other than Cl in the ion conductive substance may be 50% by mol or less, 30% by mol or less, 20% by mol or less, 10% by mol or less, or 5% by mol or less with respect to the total amount of halogen elements contained in the ion conductive substance. The halogen element other than Cl may be Br.

A content of the oxygen element in the ion conductive substance may be 1% to 30% by mol, 3% to 25% by mol, 5% to 25% by mol, 8% to 20% by mol, or 10% to 18% by mol with respect to the total amount of atoms contained in the ion conductive substance. The ion conductive substance may contain a molecular anion containing oxygen. Examples of the molecular anion containing oxygen include a peroxide ions($O_2^-$) and a hydroxide ion. The ion conductive substance may contain a hydrogen element. In a case where the ion conductive substance contains a hydrogen element, a content of the hydrogen element may be 0.5% to 25% by mol, 1% to 20% by mol, or 3% to 15% by mol with respect to the total amount of atoms contained in the ion conductive substance. In the case where the ion conductive substance contains the hydrogen element, the content of the hydrogen element may be 0.01% to 10% by mol or 0.1% to 5% by mol with respect to the total amount of atoms contained in the ion conductive substance.

The ion conductive substance may contain an element (another element) other than the alkali metal element, the metal element M, the halogen element, the dopant element X, and the oxygen element. Such an element may be at least one of divalent or higher metal elements, and may be at least one of divalent, trivalent, and tetravalent metal elements. Examples of the divalent metal include Zn. Examples of the metal element include Sc, La, Ce, Pr, Nd, Pm, Sm, Eu, Gd, Tb, Dy, Ho, Er, Yb, Lu, Y, and Al. Examples of the tetravalent metal element include Zr, Ti, and Hf. A content of the other element may be 30% by mol or less, 20% by mol or less, 15% by mol or less, or 10% by mol or less with respect to the total amount of atoms contained in the ion conductive substance.

It is preferable that at least one diffraction peak having a half-value width of 1.5° to 10° is observed within a range in which a $2\theta$ angle is 10° to 20° in an X-ray diffraction chart of the ion conductive substance of the present embodiment measured using $CuK\alpha$ rays at 25°C. The diffraction peak having the half-value width of 1.5° to 10° may be a diffraction peak having the largest width (having the largest half-value width) or a diffraction peak having the highest peak height within the range in which the $2\theta$ angle is 10° to 20°. The half-value width may be 1.5° to 8° or 2.0° to 6.0°. Note that, in the present specification, the half-value width means a full width at half maximum (FWHM) unless otherwise specified. In addition, in the present specification, the peak observed within the range in which the $2\theta$ angle is 10° to 20° refers to a peak at a peak position within the range in which the $2\theta$ angle is 10° to 20°.

A half-value width of a diffraction peak having the highest peak height within the range in which the $2\theta$ angle is 10° to 20° may be 0.1° or more and less than 1.5° in the X-ray diffraction chart of the ion conductive substance of the present embodiment measured using $CuK\alpha$ rays at 25°C. The half-value width may be 0.1° to 1.4° or 0.2° to 1.3°. When the half-value width is in such a range, the ion conductive substance is improved in heat resistance, specifically, improved in structural stability when heated, which tends to contribute to operation stability in a high temperature range.

The ion conductive substance of the present embodiment may contain a compound represented by the following Composition Formula (1) (also referred to as an alkali metal-containing halide).

$$A_\alpha M_\beta X_\gamma Z a E_\eta O_\varepsilon H_\zeta \cdots \qquad (1)$$

(In the formula, A is an alkali metal element, M is the above-described metal element M, X is the above-described dopant element X, and Z is a halogen element, and $0.8 \leq \alpha \leq 2$, $0.5 \leq \beta \leq 1.5$, $0.005 \leq \gamma \leq 0.5$, $3 \leq \delta \leq 6$, and $0.5 \leq \varepsilon \leq 2$ are satisfied.)

For $\alpha$, $0.9 \leq \alpha \leq 1.8$, $1.0 \leq \alpha \leq 1.8$, or $1.1 \leq \alpha \leq 1.6$ may be satisfied. Any combination of the upper limit and lower limit for $\alpha$ can be adopted.

For $\beta$, $0.5 < \beta \leq 1.4$, $0.6 \leq \beta \leq 1.4$, $0.7 \leq \beta \leq 1.4$, $0.8 \leq \beta \leq 1.2$, $0.85 \leq \beta \leq 1.1$, or $0.88 \leq \beta \leq 1.05$ may be satisfied. Any combination of the upper limit and lower limit for $\beta$ can be adopted.

For $\gamma$, $0.001 \leq \gamma \leq 0.25$, $0.005 \leq \gamma \leq 0.2$, $0.008 \leq \gamma \leq 0.15$, or $0.015 \leq \gamma \leq 0.15$ may be satisfied. Any combination of the upper limit and lower limit for $\gamma$ can be adopted.

For $\delta$, $3.5 \leq \delta \leq 5.5$, $3.7 \leq \delta \leq 5.0$, or $3.8 \leq \delta \leq 5.1$ may be satisfied. Any combination of the upper limit and lower limit for $\delta$ can be adopted.

For $\varepsilon$, $0.7 \leq \varepsilon \leq 1.8$, $0.8 \leq \varepsilon \leq 1.6$, or $1.05 \leq \varepsilon \leq 1.5$ may be satisfied. Any combination of the upper limit and lower limit for $\varepsilon$ can be adopted.

E is an element (the other element described above) other than A, M, X, and Z. Examples of E include C, B, and N. $\eta$ may be 0 to 0.1, 0 to 0.01, 0 to 0.001, or substantially 0.

$0 \le \zeta \le 2.0$, $0.01 \le \zeta \le 1.5$, or $0.1 \le \zeta \le 1.0$ may be satisfied. Any combination of the upper limit and lower limit for $\zeta$ can be adopted.

A method for producing the ion conductive substance of the present embodiment is not particularly limited, and examples thereof include a production method including a step of performing ball milling on raw materials.

The raw materials are not particularly limited. Examples of an alkali metal source (compound containing alkali metal) include alkali metal halides, alkali metal oxides, alkali metal peroxides, and alkali metal hydroxides. Examples of a metal element M source (compound containing the metal element M) include halides of the metal element M. Examples of a dopant element X source (compound containing the dopant element) include halides of the dopant element X. It is preferable to mix the raw materials before performing the ball milling, and it is more preferable to mix the raw materials under an inert atmosphere (for example, Ar atmosphere).

Conditions for the ball milling are not particularly limited, and can be set to 10 to 100 hours at a rotation speed of 200 to 700 rpm. The grinding time may be 1 hour to 72 hours, may be 12 to 60 hours, or may be 20 to 60 hours.

Balls used to perform the ball milling are not particularly limited, and zirconia balls can be used. The size of the balls to be used is not particularly limited, and balls of 2 mm to 10 mm can be used.

The raw materials are sufficiently mixed by performing the ball milling for the above-described time, and a mechanochemical reaction is promoted, so that ionic conductivity of a compound thus obtained can be improved.

Annealing may be performed on a product (ion conductive substance) obtained by performing the ball milling, but it is preferable not to perform the annealing. Examples of the annealing include heating the ball-milled product at 100°C or higher, 100°C to 300°C, or 150°C to 250°C.

The ion conductive substance of the present embodiment can be used, for example, as a material for electrochemical devices such as a capacitor and a battery. Examples of such a material include a material of an electrolyte (solid electrolyte). Examples of the battery include batteries such as a lithium ion battery and a sodium ion battery, which are charged and discharged by movement of alkali metal ions between a positive electrode and a negative electrode. In addition, the ion conductive substance of the present embodiment may be contained in a positive electrode or a negative electrode of a battery.

Hereinafter, the battery of the present embodiment will be described using a lithium ion battery as an example. The lithium ion battery includes a positive electrode, a negative electrode, and an electrolyte (solid electrolyte) disposed between the positive electrode and the negative electrode. The ion conductive substance (alkali metal-containing halide (in this case, lithium-containing halide)) of the present embodiment may be contained in the electrolyte of the lithium ion battery.

The positive electrode of the lithium ion battery is not particularly limited and contains a positive electrode active material, and may contain a conductive additive, a binder, and the like as necessary.

The positive electrode may be obtained by forming a layer containing these materials on a current collector. Examples of the positive electrode active material include a lithium-containing composite metal oxide containing lithium (Li) and at least one transition metal selected from the group consisting of V, Cr, Mn, Fe, Co, Ni, and Cu. Examples of such a lithium composite metal oxide include $LiCoO_2$, $LiNiO_2$, $LiMn_2O_4$, $LiNi_{0.5}Mn_{1.5}O_4$, $Li_2MnO_3$, $LiNi_xMn_yCo_{1-x-y}O_2$ [0 < x + y < 1], $LiNi_xCo_yAl_{1-x-y}O_2$ [0 < x + y < 1], $LiCr_{0.5}Mn_{0.5}O_2$, $LiFePO_4$, $Li_2FeP_2O_7$, $LiMnPO_4$, $LiFePO_3$, $Li_3V_2(PO_4)_3$, $Li_2CuO_2$, $Li_2FeSiO_4$, and $Li_2MnSiO_4$.

The negative electrode of the lithium ion battery is not particularly limited and contains a negative electrode active material, and may contain a conductive additive, a binder, and the like as necessary. Examples thereof can include single elements such as Li, Si, P, Sn, Si-Mn, Si-Co, Si-Ni, In, and Au, as well as alloys or composites containing these elements, carbon materials such as graphite, and substances in which lithium ions are intercalated between layers of the carbon materials.

A material of the current collector is not particularly limited, and may be a single metal element such as Cu, Mg, Ti, Fe, Co, Ni, Zn, Al, Ge, In, Au, Pt, Ag, or Pd, or an alloy.

A solid electrolyte layer may include a plurality of layers. For example, in addition to the solid electrolyte layer containing the ion conductive substance of the present embodiment, a sulfide solid electrolyte layer may be included. The sulfide solid electrolyte layer may be included between the solid electrolyte containing the ion conductive substance of the present embodiment and the negative electrode. The sulfide solid electrolyte is not particularly limited, and examples thereof include $Li_6PS_5Cl$, $Li_2S$-$PS_5$, $Li_{10}GeP_2S_{12}$, $Li_{9.6}P_3S_{12}$, $Li_{9.54}Si_{1.74}P_{1.44}S_{11.7}Cl_{0.3}$, and $Li_3PS_4$.

**Examples**

(Examples 1 to 20 and Comparative Example 1)

In an argon atmosphere having a dew point of -70°C or lower (hereinafter, referred to as a dry argon atmosphere), a lithium source, a tantalum source, and a dopant element source were weighed so as to have charging composition described in Table 1, thereby preparing raw materials.

A total of 1.2 g of the above-described raw materials were put in a zirconia pot having a volume of 50 ml for the following planetary ball mill, and 65 g of zirconia balls having a diameter of 4 mm were put therein. An ion conductive substance was obtained by performing a treatment to cause a mechanochemical reaction under conditions of 24 hours and 300 rpm. As shown in Table 1, after ball milling, annealing was performed on some ion conductive substances. The annealing was performed by heating the ion conductive substances in the argon atmosphere at 200°C for 5 hours.

The ball mill was operated in a mode of being rotated for 10 minutes, followed by a 1-minute stop as an interval, while alternately switching clockwise and counterclockwise rotation directions. As a result, ion conductive substances (lithium-containing chlorides) of Examples and Comparative Example were obtained.

Planetary ball mill machine: PM 400 manufactured by Verder Scientific GmbH & Co. KG

Note that the following compounds were used as the lithium source, the tantalum source, and the dopant element source.

Example 1: $Li_2O_2$, $TaCl_5$, $BiCl_3$

Example 2: $Li_2O_2$, $TaCl_5$, $BiOCl$

Example 3: $Li_2O_2$, $TaCl_5$, $InCl_3$

Example 4: $Li_2O_2$, $TaCl_5$, $BiCl_3$

Example 5: $Li_2O_2$, $TaCl_5$, $InCl_3$

Example 6: $Li_2O$, $TaCl_5$, $InCl_3$

Example 7: $Li_2O_2$, $TaCl_5$, $BiCl_3$

Example 8: $Li_2O_2$, $TaCl_5$, $BiOCl$

Example 9: $Li_2O_2$, $TaCl_5$, $BiOCl$

Example 10: $Li_2O_3$, $TaCl_5$, $InCl_3$

Example 11: $Li_2O_2$, $TaCl_5$, $InCl_3$

Example 12: $Li_2O_3$, $TaCl_5$, $InCl_3$

Example 13: $Li_2O_2$, $TaCl_5$, $InCl_3$, $BiCl_3$

Example 14: $Li_2O_2$, $TaCl_5$, $MgCl_2$, $BiCl_3$

Example 15: $Li_2O_2$, $TaCl_5$, $SbCl_3$

Example 16: $Li_2O_2$, $TaCl_5$, $MgCl_2$

Example 17: $LiOH$, $TaCl_5$, $BiCl_3$

Example 18: $LiOH$, $TaCl_5$, $BiCl_3$

Example 19: $Li_2O_2$, $LiBr$, $TaCl_5$, $BiCl_3$

Example 20: $Li_2O_2$, $LiBr$, $TaCl_5$, $BiCl_3$

Comparative Example 1: $Li_2O_2$, $TaCl_5$, $YCl_3$

<Powder X-Ray Diffraction>

For the obtained ion conductive substance, a diffraction peak observed within a range of 10° to 20° at $2\theta$ was evaluated by the powder X-ray diffraction measurement at 25°C. The results are shown in Table 1. The powder X-ray diffraction measurement was performed under the following conditions.

Measuring apparatus: Ultima IV (manufactured by Rigaku Holdings Corporation)

X-ray generator: $CuK\alpha$ radiation source, voltage 40 kV, current 40 mA

X-ray detector: Scintillation counter or semiconductor detector

Measurement range: Diffraction angle $2\theta$ = 5° to 80°

Scan speed: 4°/min

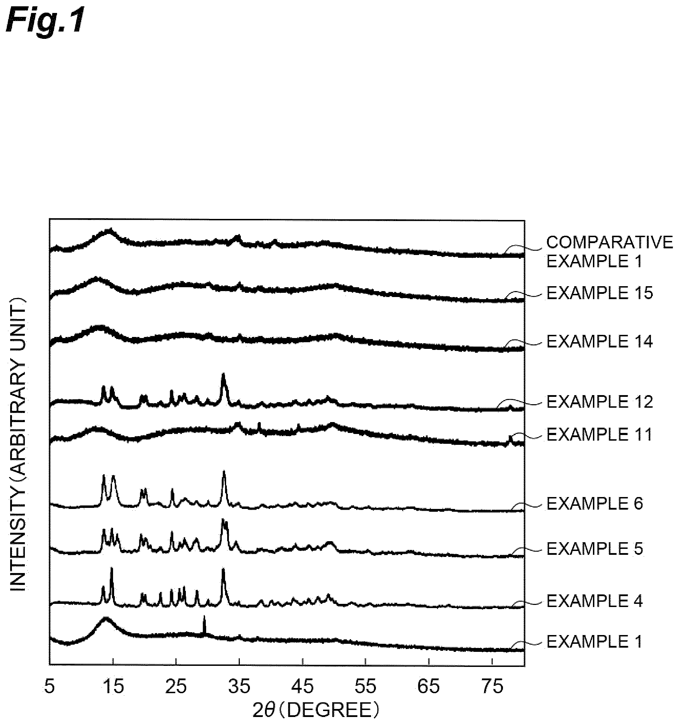

FIG. 1 is a diagram illustrating an X-ray diffraction chart obtained for the ion conductive substances of each of Examples and Comparative Example.

A half-value width of a peak was determined by removing a background signal and performing fitting.

<Evaluation of Ionic Conductivity>

A press molding die including a frame, a punch lower part, and a punch upper part were prepared. Note that the frame was formed of insulating polycarbonate. In addition, both the punch upper part and the punch lower part were formed of electron-conductive stainless steel, and were electrically connected to terminals of an impedance analyzer (SI 1260 manufactured by Solatron Analytical).

The ionic conductivity of each of the ion conductive substances was measured by the following method using the press molding die. First, filling of powder of the ion conductive substance onto the punch lower part inserted vertically downward into a hollow section of the frame was performed in the dry argon atmosphere. Then, the punch upper part was pressed toward the hollow section of the frame from above to apply a pressure of 370 MPa to the ion conductive substance powder inside the press molding die. After the pressure was applied, a punch was fastened and fixed vertically with a jig, and the impedance of the ion conductive substance was measured by an electrochemical impedance measurement method using the impedance analyzer in a state where a constant pressure is maintained.

From the impedance measurement results, a graph of a Cole-Cole plot was created. In the Cole-Cole plot, the real part of the impedance at a measurement point having the smallest absolute value of a phase of complex impedance was regarded as a resistance value to ion conduction of the ion conductive substance. The resistance value was used to calculate the ionic conductivity based on the following Formula (III). The results are shown in Table 2.

$$\sigma = (R_{SE} \times S/t)^{-1} \cdots (III)$$

In the formula,

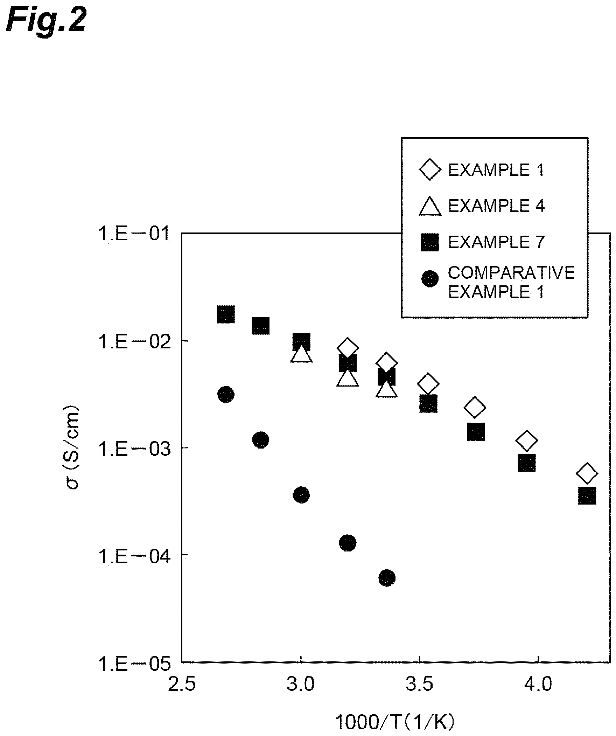

$\sigma$ is ionic conductivity,
S is a contact area of the ion conductive substance with the punch upper part (equal to a cross-sectional area of the hollow section of the frame),
$R_{SE}$ is a resistance value of a layer of the ion conductive substance in the impedance measurement, and
t is a thickness of the layer of the ion conductive substance when the pressure is applied. FIG. 2 is a diagram illustrating Arrhenius plots obtained for the ion conductive substances of Examples 1, 4, and 7 and Comparative Example 1.

[Table 1]

| | Charging composition | Annealing | Half-value width*1 | Half-value width*2 | Ion conductivity (25°C) |
|---|---|---|---|---|---|
| Example 1 | $Li_{1.4}Ta_{0.97}B_{10.03}Cl_{4.94}O_{1.4}$ | Absent | 2.60° | 2.60° | 6.27 mS/cm |
| Example 2 | $Li_{1.4}Ta_{0.97}B_{10.03}Cl_{4.88}O_{1.43}$ | Absent | 4.01° | 4.01° | 6.09 mS/cm |
| Example 3 | $Li_{1.4}Ta_{0.97}In_{0.03}Cl_{4.88}O_{1.4}$ | Absent | 4.09° | 4.09° | 5.50 mS/cm |
| Example 4 | $LiTa_{0.97}Bi_{0.03}Cl_{4.94}O$ | Present | 0.35° | 0.35° | 3.55 mS/cm |
| Example 5 | $LiTa_{0.95}In_{0.05}Cl_{4.90}$ | Present | 1.21° | 0.51° | 0.99 mS/cm |
| Example 6 | $Li_2Ta_{0.95}In_{10.05}Cl_{4.90}$ | Present | 0.89° | 0.89° | 1.08 mS/cm |
| Example 7 | $Li_{1.4}Ta_{0.9}Bi_{0.1}Cl_{4.8}O_{1.4}$ | Present | 3.84° | 3.84° | 3.98 mS/cm |
| Example 8 | $Li_{1.4}Ta_{0.94}Bi_{0.06}Cl_{4.76}O_{1.46}$ | Absent | 4.45° | 4.45° | 3.37 mS/cm |
| Example 9 | $Li_{1.4}Ta_{0.99}Bi_{0.01}Cl_{4.86}O_{1.41}$ | Absent | 4.03° | 4.03° | 2.68 mS/cm |
| Example 10 | $Li_{1.4}Ta_{0.94}In_{0.06}Cl_{4.88}O_{1.4}$ | Absent | 5.15° | 5.15° | 5.17 mS/cm |
| Example 11 | $Li_{1.4}Ta_{0.9}In_{0.1}Cl_{4.8}O_{1.4}$ | Absent | 4.10° | 4.10° | 5.61 mS/cm |
| Example 12 | $LiTa_{0.97}In_{0.03}Cl_{4.94}O$ | Present | 0.54° | 0.45° | 0.54 mS/cm |
| Example 13 | $Li_{1.4}Ta_{0.96}In_{0.02}Bi_{0.02}Cl_{4.92}O_{1.4}$ | Absent | 4.12° | 4.12° | 4.89 mS/cm |
| Example 14 | $Li_{1.4}Ta_{0.96}Mg_{0.02}Bi_{0.02}Cl_{4.88}O_{1.4}$ | Absent | 4.79° | 4.79° | 6.87 mS/cm |
| Example 15 | $Li_{1.4}Ta_{0.97}Sb_{0.03}Cl_{4.94}O_{1.4}$ | Absent | 5.02° | 5.02° | 4.31 mS/cm |
| Example 16 | $Li_{1.4}Ta_{0.97}Mg_{0.03}Cl_{4.91}O_{1.4}$ | Absent | 4.09° | 4.09° | 4.10 mS/cm |
| Example 17 | $Li_{1.4}Ta_{0.97}Bi_{0.03}C_{14.94}O_{1.4}H_{1.4}$ | Absent | 5.50° | 5.50° | 0.13 mS/cm |
| Example 18 | $Li_{1.4}Ta_{0.97}Bi_{0.03}Cl_{4.94}O_{1.4}H_{0.3}$ | Absent | 1.65° | 1.65° | 2.09 mS/cm |
| Example 19 | $Li_{1.4}Ta_{0.97}B_{10.03}Cl_{4.94}Br_{0.05}O_{1.35}$ | Absent | 2.40° | 2.40° | 1.04 mS/cm |
| Example 20 | $Li_{1.4}Ta_{0.97}Bi_{0.03}Cl_{4.94}Br_{0.1}O_{13}$ | Absent | 5.43° | 5.43° | 3.08 mS/cm |

(continued)

|  | Charging composition | Annealing | Half-value width[*1] | Half-value width[*2] | Ion conductivity (25°C) |
|---|---|---|---|---|---|
| Comparative Example 1 | $LiTa_{0.6}Y_{0.4}Cl_{4.2}O$ | Absent | 4.24° | 4.24° | 0.06 mS/cm |

\* 1: XRD peak half-value width with largest width at 10° to 20°
\*2: XRD peak half-value width of peak with highest peak height at 10° to 20°

<Preparation of Secondary Battery>

In the dry argon atmosphere, the ion conductive substance of Example 3, $LiNi_{1/3}Mn_{1/3}Co_{1/3}O_2$, and acetylene black were weighed as 29 parts by mass, 67 parts by mass, and 4 parts by mass respectively, and mixed in a mortar to obtain a mixture.

In an insulating cylinder having an inner diameter of 10 mm, 100 mg of the ion conductive substance of Example 3 and 15 mg of the above-described mixture were sequentially laminated to obtain a laminate. A pressure of 370 MPa was applied to the laminate to form a first electrode (a layer of the mixture) and a first solid electrolyte layer (a layer of the ion conductive substance).

Next, 60 mg of a sulfide solid electrolyte $Li_6PS_5Cl$ was put so as to come into contact with the first solid electrolyte layer to obtain a laminate. A pressure of 370 MPa was applied to the laminate to form a second solid electrolyte layer. The first solid electrolyte layer was sandwiched between the first electrode and the second solid electrolyte layer.

Next, 60 mg of an In foil was put so as to come into contact with the second solid electrolyte layer, and 2 mg of a Li foil was further put so as to come into contact with the In foil to obtain a laminate. A pressure of 370 MPa was applied to the laminate to form a second electrode.

Current collectors formed of stainless steel were attached to the first electrode and the second electrode, and lead wires were then attached to the current collectors. All the members were disposed in a desiccator and were sealed, whereby a secondary battery of Example 3 was obtained.

<Charge and Discharge Test>

As a charge and discharge tester, the following product was used.

Charge and discharge tester: TOSCAT-3100 manufactured by Toyo System Co., Ltd.

A charge and discharge test was performed at 60°C at three Crates of 0.1C, 1C, and 3C. The discharge capacity at each C rate is as shown in Table 2.

Charging was performed up to 3.7 V at a current density corresponding to each C rate at a constant current and a constant voltage (CCCV charging). Discharging was performed up to 1.9 V at a current density corresponding to each C rate.

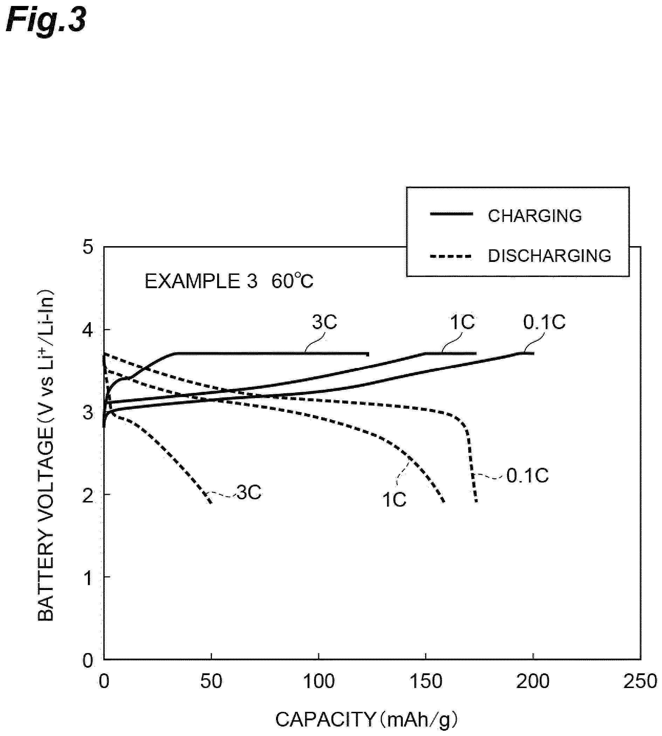

FIG. 3 illustrates the results of the charge and discharge test of the secondary battery of Example 3. In addition, Table 2 shows the discharge capacity at each C rate.

For the secondary battery of Example 3, a high discharge capacity was obtained at all the C rates.

[Table 2]

|  | 0.1 C | 1 C | 3 C |
|---|---|---|---|
| Example 3 | 173.6 mAh/g | 158.4 mAh/g | 49.9 mAh/g |

<Direct Current Density Evaluation by Symmetric Cells>

A cell for direct current density evaluation was produced as described below. Note that the cell for direct current density evaluation was produced in a glove box substituted with an inert gas.

First, 100 mg of the ion conductive substance of Example 1 was put into an insulating cylinder having a diameter of 10 mm. A pressure of 370 MPa was applied to the ion conductive substance to form a solid electrolyte layer (a layer of the ion conductive substance).

Next, 60 mg of $Li_6PS_5Cl$ was laminated on each of upper and lower surfaces of the solid electrolyte layer, and then a pressure of 370 MPa was applied to form separator layers on the upper and lower surfaces of the solid electrolyte layer. That is, the solid electrolyte layer was sandwiched between two separator layers.

Next, 60 mg of an In foil was added so as to come into contact with each of the separator layers, and 2 mg of a Li foil was further added so as to come into contact with the In foil to obtain a laminate. A pressure of 370 MPa was applied to the laminate to form an electrode on a surface of each of the separator layers opposite to the solid electrolyte layer.

Current collectors formed of stainless steel was attached to the electrodes, respectively, and lead wires were then attached to the current collectors. All the members were disposed in a desiccator sealed in the glove box. In this manner, the cell for direct current density evaluation was obtained.

Direct current density evaluation was performed according to the following content.

After application of 250 mV for 20 minutes, there was a 5-minute stop. Next, 250 mV was applied in the opposite direction for 20 minutes. A current density per unit area flowing at that time was measured.

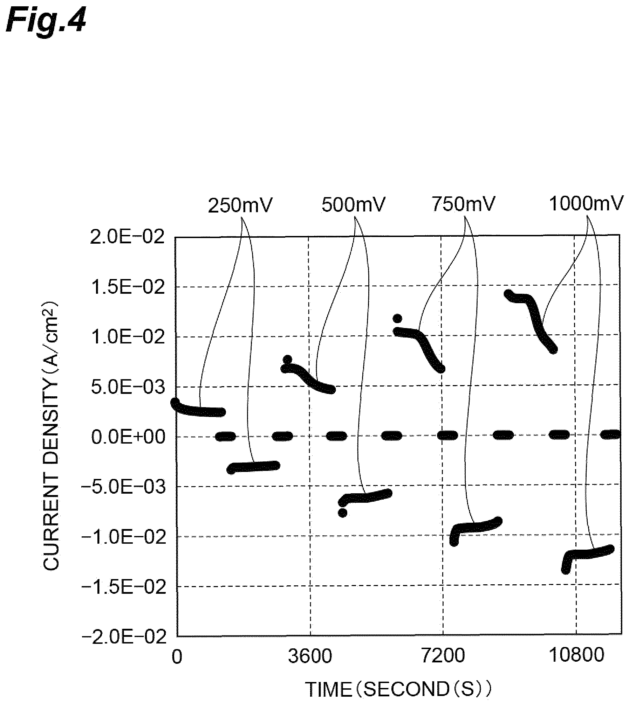

Thereafter, voltages of 500 mV, 750 mV, and 1000 mV were applied stepwise in the same procedure, and the current density when each of the voltages was applied was measured. FIG. 4 is a result of the direct current density evaluation by symmetric cells using the ion conductive substance of Example 1.

**Claims**

1. An ion conductive substance comprising an alkali metal element, a metal element M, a halogen element, a dopant element X, and an oxygen element,

   wherein the metal element M is at least one of Ta and Nb, and
   the dopant element X is at least one element selected from the group consisting of Ga, In, Sb, Bi, Mg, Ca, Sr, and Ba.

2. The ion conductive substance according to claim 1, wherein the halogen element contains Cl.

3. The ion conductive substance according to claim 1 or 2, wherein the dopant element X contains at least one element of In and Bi.

4. The ion conductive substance according to claim 1 or 2, wherein a content of the dopant element X with respect to the metal element M is 25% by mol or less.

5. The ion conductive substance according to claim 1 or 2, wherein a content of the alkali metal element is 6% to 25% by mol, a content of the metal element M is 5% to 16% by mol, a content of the halogen element is 40% to 70% by mol, and a content of the dopant element X is 0.1% to 1.5% by mol with a total number of atoms contained in the ion conductive substance as a reference.

6. The ion conductive substance according to claim 1 or 2, wherein at least one diffraction peak having a half-value width of 1.5° to 10° is present within a range in which a $2\theta$ angle is 10° to 20° in an X-ray diffraction chart measured using a CuK$\alpha$ ray at 25°C.

7. The ion conductive substance according to claim 1 or 2, wherein a half-value width of a diffraction peak having a highest peak height within a range in which a $2\theta$ angle is 10° to 20° is 0.1° or more and less than 1.5° in an X-ray diffraction chart measured using a CuK$\alpha$ ray at 25°C.

8. An electrolyte comprising the ion conductive material according to claim 1 or 2.

9. A battery comprising the electrolyte according to claim 8.

*Fig.1*

COMPARATIVE
EXAMPLE 1

EXAMPLE 15

EXAMPLE 14

EXAMPLE 12

EXAMPLE 11

EXAMPLE 6

EXAMPLE 5

EXAMPLE 4

EXAMPLE 1

INTENSITY (ARBITRARY UNIT)

$2\theta$ (DEGREE)

# *Fig.2*

# Fig.3

# Fig.4

## INTERNATIONAL SEARCH REPORT

| International application No. |
| --- |
| **PCT/JP2023/039612** |

| A. | CLASSIFICATION OF SUBJECT MATTER |
| --- | --- |

*H01B 1/06*(2006.01)i; *C01G 33/00*(2006.01)i; *C01G 35/00*(2006.01)i; *H01M 10/052*(2010.01)i; *H01M 10/0562*(2010.01)i
FI: H01B1/06 A; C01G33/00 A; C01G35/00 C; H01M10/052; H01M10/0562

According to International Patent Classification (IPC) or to both national classification and IPC

| B. | FIELDS SEARCHED |
| --- | --- |

Minimum documentation searched (classification system followed by classification symbols)

H01B1/06; C01G33/00; C01G35/00; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2020/137153 A1 (PANASONIC INTELLECTUAL PROPERTY MANAGEMENT CO., LTD.) 02 July 2020 (2020-07-02)<br>paragraphs [0009]-[0268], fig. 1-13 | 1-3, 6, 8-9 |
| A | | 4-5, 7 |
| A | JP 2018-516438 A (PNEUMATICOAT TECH LLC) 21 June 2018 (2018-06-21)<br>paragraphs [0001]-[0262], fig. 1-25 | 1-9 |

☐ Further documents are listed in the continuation of Box C. ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 December 2023** | **09 January 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/039612**

| Patent document cited in search report | | | Publication date (day/month/year) | Patent family member(s) | | | Publication date (day/month/year) |
|---|---|---|---|---|---|---|---|
| WO | 2020/137153 | A1 | 02 July 2020 | US | 2021/0242494 | A1 | |
| | | | | paragraphs [0021]-[0299], fig. 1-13 | | | |
| | | | | EP | 3905269 | A1 | |
| | | | | CN | 112805793 | A | |
| JP | 2018-516438 | A | 21 June 2018 | WO | 2016/196688 | A1 | |
| | | | | paragraphs [0001]-[0296], fig. 1-25 | | | |
| | | | | US | 2016/0351910 | A1 | |
| | | | | EP | 3304635 | A1 | |
| | | | | KR | 10-2018-0011207 | A | |
| | | | | CN | 107851840 | A | |

Form PCT/ISA/210 (patent family annex) (January 2015)

**REFERENCES CITED IN THE DESCRIPTION**

**Patent documents cited in the description**

- WO 2020137153 A
- WO 2021220578 A
- WO 2021220577 A